# EUROPÄISCHE PATENTSCHRIFT

(11) **EP 3 099 725 B1**
(45) Veröffentlichungstag und Bekanntmachung des Hinweises auf die Patenterteilung: **06.03.2019**
(21) Anmeldenummer: 15702660.0
(22) Anmeldetag: 21.01.2015
(51) Int. Cl.: C08G 18/76, C08K 5/00, C08K 5/10, C08G 18/32, C08K 5/29, C08G 18/42, C08K 5/521

(54) **STABILISIERTE WEICHMACHER FÜR THERMOPLASTISCHES POLYURETHAN**
STABILIZED PLASTICISERS FOR THERMOPLASTIC POLYURETHANE
ADOUCISSEUR STABILISÉ POUR POLYURÉTHANE THERMOPLASTIQUE

(30) Priorität: 30.01.2014 EP 14153255
(43) Veröffentlichungstag der Anmeldung: 07.12.2016
(73) Patentinhaber: BASF SE, 67056 Ludwigshafen am Rhein (DE)
(72) Erfinder: SCHAEFER, Frank, 32351 Stemwede Haldem (DE); WETTACH, Henning, 49078 Osnabrück (DE)
(74) Vertreter: BASF IP Association
(86) Internationale Anmeldenummer: PCT/EP2015/051067
(87) Internationale Veröffentlichungsnummer: WO 2015/113874

(56) Entgegenhaltungen:
- EP-A1- 1 556 433
- WO-A1-2010/125009

## Beschreibung

Die vorliegende Erfindung betrifft ein Verfahren zur Herstellung eines thermoplastischen Polyurethans, umfassend das Bereitstellen einer Zusammensetzung Z(W) enthaltend mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern; und die anschließende Zugabe der Zusammensetzung Z(W) zu einem thermoplastischen Polyurethan oder einem Reaktionsgemisch zur Herstellung eines thermoplastischen Polyurethans. Weiter betrifft die vorliegende Erfindung ein thermoplastisches Polyurethan, erhältlich oder erhalten nach einem erfindungsgemäßen Verfahren und die Verwendung der Zusammensetzung Z(W) als Weichmacher für thermoplastische Polyurethane. Die vorliegende Erfindung betrifft auch Formkörper enthaltend ein erfindungsgemäßes thermoplastisches Polyurethan.

Weichgemachte thermoplastische Polyurethane sind weithin bekannt und werden beispielsweise in der DE 10 2005 040 131 oder der EP 1 338 614 beschrieben. Derartige thermoplastische Polyurethane enthalten mindestens einen Weichmacher. Bei der Auswahl des Weichmachers ist besonders darauf zu achten, dass das Produkt verträglich mit dem thermoplastischen Polyurethan ist, der Weichmacher eine ausreichend gute weichmachende Wirkung aufweist und dass der Weichmacher keinen negativen Einfluss auf beispielsweise Beständigkeit gegenüber Wasser und anderen Medien mit sich bringt.

Als Weichmacher für thermoplastische Polyurethane (TPU) werden häufig Phthalate und Benzoate für Polyester-TPU oder Phosphate für Polyether-TPU eingesetzt. Derartige Systeme werden beispielsweise in der EP 1 556 433 oder EP 0 134 455 offenbart. Weiterhin bekannte Weichmacher sind ausgewählt aus der Gruppe der Adipate, hydrierten Phthalate, Fettsäuren oder Zitronensäureestern, wobei Letztere beispielsweise in der EP 1 108 735 oder WO 2010/125009 offenbart werden.

Aus dem Stand der Technik ist bekannt, dass reine Zitronensäureester sehr gute weichmachende Wirkung in thermoplastischen Polyurethanen aufweisen. Beispielsweise wird in der WO 2010/125009 ein entsprechender Weichmacher für thermoplastische Polyurethane offenbart. Dabei hat reiner Zitronensäureester aber den Nachteil einer geringen thermischen Beständigkeit, beispielsweise schon bei Temperaturen, wie sie bei der Herstellung und der Verarbeitung dieser Ester sowie der Einarbeitung dieser Ester in thermoplastisches Polyurethan auftreten. Bei den beschriebenen Temperaturen von beispielsweise bis 190 °C kann sich beispielsweise Acetylbutylcitrat teilweise derart thermisch zersetzen, dass eine deutliche Erhöhung der Säurezahl messbar wird. Wird ein so geschädigter Weichmacher in thermoplastisches Polyurethan eingearbeitet, wirkt sich dies negativ auf die Beständigkeit des weichgemachten thermoplastischen Polyurethans aus. Dies kann dazu führen, dass beispielsweise die Hydrolysebeständigkeit eines derart weichgemachten thermoplastischen Polyurethans deutlich verschlechtert wird.

Eine Aufgabe der vorliegenden Erfindung war es demnach, Weichmacher für thermoplastische Polyurethane bereitzustellen, die eine ausreichende Beständigkeit gegen thermischen Abbau haben. Eine weitere Aufgabe der vorliegenden Erfindung war es, Weichmacher für thermoplastische Polyurethane bereitzustellen, die eine ausreichende Hydrolysebeständigkeit aufweisen.

Gleichzeitig sollten die mechanischen Eigenschaften und die Verarbeitbarkeit der so hergestellten weichgemachten thermoplastischen Polyurethane vergleichbar mit herkömmlichen Produkten sein.

Eine weitere Aufgabe der vorliegenden Erfindung war es, Herstellungsverfahren für thermoplastische Polyurethane unter Verwendung derartiger Weichmacher bereitzustellen.

Erfindungsgemäß wird diese Aufgabe gelöst durch ein Verfahren zur Herstellung eines thermoplastischen Polyurethans, umfassend die Schritte
(i) Bereitstellen einer Zusammensetzung Z(W) enthaltend
   (a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
   (b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
(ii) Zugabe der Zusammensetzung Z(W) zu einem thermoplastischen Polyurethan oder einem Reaktionsgemisch zur Herstellung eines thermoplastischen Polyurethans.

Die vorliegende Erfindung betrifft ein Verfahren zur Herstellung eines thermoplastischen Polyurethans, umfassend die Schritte (i) und (ii). Dabei wird gemäß Schritt (i) eine Zusammensetzung Z(W) bereitgestellt, die mindestens ein Carbodiimid, und mindestens einen Ester wie zuvor definiert aufweist. Gemäß Schritt (ii) wird die Zusammensetzung Z(W) zu einem thermoplastischen Polyurethan oder einem Reaktionsgemisch zur Herstellung eines thermoplastischen Polyurethans zugegeben. Dabei ist es im Rahmen der vorliegenden Erfindung möglich, dass die Zusammensetzung einem ausreagierten thermoplastischen Polyurethan zugegeben wird oder einem Reaktionsgemisch zur Herstellung eines thermoplastischen Polyurethans.

Sofern die Zusammensetzung Z(W) einem Reaktionsgemisch zugegeben wird, kann dies prinzipiell in jedem Stadium des Herstellungsverfahrens eines thermoplastischen Polyurethans erfolgen.

Sofern die Zusammensetzung Z(W) zu einem im Wesentlichen ausreagierten thermoplastischen Polyurethan zugegeben wird, kann dies beispielsweise durch Eincompoundieren oder Einquellen erfolgen.

Gemäß einer weiteren Ausführungsform betrifft die vorliegende Erfindung demgemäß auch ein Verfahren wie zuvor beschrieben, wobei die Zusammensetzung Z(W) gemäß Schritt (ii) einem thermoplastischen Polyurethan durch Eincompoundieren oder Einquellen zugesetzt wird.

Überraschenderweise wurde gefunden, dass durch die erfindungsgemäße Zusammensetzung Z(W) eine Stabilisierung des Esters ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern durch den Zusatz eines carbodiimidhaltigen Stabilisators erreicht wird, und bei gleicher thermischer Belastung die resultierende Erhöhung der Säurezahl des Esters deutlich reduziert werden kann. Die Säurezahl dient dabei als Maß für den thermischen Abbau des Esters. Die erhöhte Säurezahl wirkt sich gleichzeitig negativ auf die hydrolytische Beständigkeit des erhaltenen weichgemachten thermoplastischen Polyurethans aus.

Ein weiterer Vorteil der erfindungsgemäßen Systeme ist auch die deutlich verbesserte Beständigkeit gegenüber hydrolytischem Abbau. So weist beispielsweise ein weichgemachtes thermoplastisches Polyurethan unter Verwendung der erfindungsgemäßen Zusammensetzung Z(W) ausweislich der Beispiele eine Hydrolysebeständigkeit von 56 Tagen auf. Ein thermoplastisches Polyurethan enthaltend eine nichtstabilisierte Variante weist dagegen ausweislich der Beispiele lediglich eine Hydrolysebeständigkeit von 35 Tagen auf. Durch die erfindungsgemäße Stabilisierung lässt sich also zum einen die thermische Beständigkeit eines esterbasierten Weichmachers erhöhen. Zum anderen lässt sich durch die Stabilisierung des Weichmachers auch ein weichgemachtes thermoplastisches Polyurethan mit deutlich verbesserter Hydrolysebeständigkeit herstellen. Wie aus den Beispielen hervorgeht, ist dieser Effekt auf die erfindungsgemäße Zugabereihenfolge zurückzuführen, d.h. ein Bereitstellen der Zusammensetzung Z(W) und anschließende Zugabe zum thermoplastischen Polyurethan.

Das erfindungsgemäße Verfahren zur Herstellung eines thermoplastischen Polyurethans umfasst das Bereitstellen einer Zusammensetzung Z(W), enthaltend
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
(b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern.

Erfindungsgemäß kann die Zusammensetzung Z(W) dabei auf alle dem Fachmann bekannten Arten erhalten werden, beispielsweise durch Mischen der Komponenten. Erfindungsgemäß kann das Vermischen mittels Standardverfahren erfolgen.

Erfindungsgemäß kann die Zusammensetzung Z(W) direkt vor der Zugabe zu dem thermoplastischen Polyurethan hergestellt werden. Dabei beinhaltet die Herstellung der Zusammensetzung Z(W) im Rahmen der vorliegenden Erfindung das Vermischen der Komponenten und ein Abbinden der Säurezahl. Je nach äußeren Bedingungen, beispielsweise Lagertemperatur und Vermischung, beträgt die Abbindezeit dabei bis zu 30 Minuten. Nach dieser Zeit ist die erfindungsgemäße Zusammensetzung Z(W) lagerstabil und kann auch zu einem deutlich späteren Zeitpunkt mit erfindungsgemäßen Eigenschaften weiterverarbeitet werden.

Gemäß einer weiteren Ausführungsform betrifft die vorliegende Erfindung demgemäß auch ein Verfahren wie zuvor beschrieben, wobei die Herstellung der Zusammensetzung Z(W) das Vermischen der Komponenten und ein Abbinden der Säurezahl beinhaltet.

Weiter betrifft die vorliegende Erfindung gemäß einer weiteren Ausführungsform auch ein Verfahren wie zuvor beschrieben, wobei die Zugabe der Zusammensetzung Z(W) gemäß Schritt (ii) erfolgt, nachdem das Abbinden abgeschlossen ist.

Die Zusammensetzung Z(W) enthält mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern. Erfindungsgemäß kann die Zusammensetzung Z(W) auch Mischungen aus zwei oder mehr der genannten Ester enthalten.

Erfindungsgemäß sind Ester geeignet, die eine ausreichende Verträglichkeit mit dem eingesetzten thermoplastischen Polyurethan aufweisen und einen weichmachenden Effekt erzielen. Weiterhin sind Ester geeignet, die bei Reaktionsbedingungen verarbeitet werden können, die üblicherweise bei der Synthese und Verarbeitung von thermoplastischen Polyurethanen vorliegen, d.h. Ester, die bei einer Temperatur im Bereich von bis zu 250°C eine ausreichende Stabilität aufweisen.

Eine erfindungsgemäß geeignete Verträglichkeit liegt beispielsweise im Bereich von 15 bis 50 %, wobei die Verträglichkeit des Esters mit dem thermoplastischen Polyurethan im Rahmen der vorliegenden Erfindung anhand der Transparenz des Gesamtsystems bestimmt wird. Vorzugsweise ist das Gesamtsystem im Rahmen der vorliegenden Erfindung transparent, d.h. es liegt eine homogene Mischung der Komponenten vor.

Vorteilhafterweise wird im Rahmen der vorliegenden Erfindung durch die weichmachenden Eigenschaften im Vergleich zum einem thermoplastischen Polyurethan ohne Zusatz der Zusammensetzung Z(W) eine Herabsetzung der Shore Härte im Bereich von 3 Shore A bis 35 Shore A, bevorzugt im Bereich von 5 Shore A bis 25 Shore A, beispielsweise im Bereich von 6 Shore A bis 15 Shore A, erreicht.

Geeignete Ester sind dem Fachmann als Weichmacher für thermoplastische Polyurethane an sich bekannt.

Besonders bevorzugt enthält die Zusammensetzung Z(W) mindestens einen Ester ausgewählt aus der Gruppe bestehend aus Zitronensäureestern und Acetylzitronensäureestern.

Erfindungsgemäß eignen sich insbesondere zitronensäureesterbasierten Weichmacherverbindungen. Diese können sowohl keine funktionellen Gruppen tragen wie beispielsweise CITROFOL® B II aber auch OH-Funktionen wie beispielsweise CITROFOL® B I oder CITROFOL® A I.

Bevorzugte Ester sind solche der allgemeinen Formel (I): 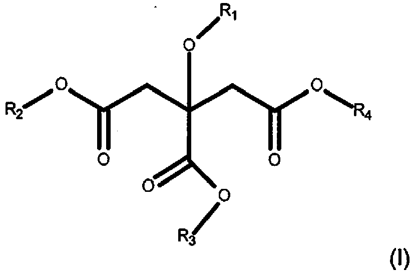 wobei
- R1: H oder ein Carbonsäurerest mit 2 bis 12 Kohlenstoffatomen, bevorzugt H oder Carbonsäurerest mit 2 bis 6 Kohlenstoffatomen, ist;
- R2, R3, R4: unabhängig voneinander ein Alkylrest mit 2 bis 12, bevorzugt 2 bis 6 Kohlenstoffatomen sind.

Gemäß einer weiteren Ausführungsform betrifft die vorliegende Erfindung demgemäß auch ein Verfahren wie zuvor beschrieben, wobei die Zusammensetzung Z(W) mindestens einen Zitronensäureester enthält.

Weiter bevorzugt enthält die Zusammensetzung Z(W) mindestens einen Ester, ausgewählt aus der Gruppe bestehend aus Triethylcitrat, Acetyltriethylcitrat, Tri(n-butyl)citrat, Acetyltri(n-butyl)citrat und Acetyl(2-ethylhexyl)citrat.

Die Zusammensetzung Z(W) enthält weiter mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden.

Auch die erfindungsgemäß eingesetzten Carbodiimide können in weiten Bereichen variieren. Geeignete Carbodiimide werden beispielsweise in der EP 0 628 541, DE 43 189 79 A1, DE 198 21 666 A1 oder der EP 1 138 706 B1 beschrieben. Insbesondere geeignete Carbodiimide werden beispielsweise durch die allgemeine Formel (II) beschrieben. 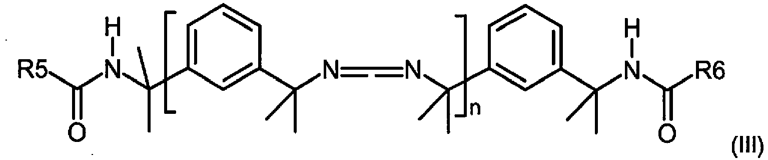 wobei n = 1 bis 20 ist und
R5 und R6 methoxylierte Polyethylenglykol-reste der Formel: -(EO)ₘ-OCH₃ mit m = 1 bis 20 sind.

Weiter bevorzugt sind im Rahmen der vorliegenden Erfindung aliphatische Carbodiimide. Gemäß einer weiteren Ausführungsform betrifft die vorliegende Erfindung demgemäß auch ein Verfahren wie zuvor beschrieben, wobei die Zusammensetzung Z(W) mindestens ein Carbodiimid ausgewählt aus der Gruppe bestehend aus monomeren aliphatischen Carbodiimiden, oligomeren aliphatischen Carbodiimiden und polymeren aliphatischen Carbodiimiden enthält.

Das molare Verhältnis an zugesetzten Carbodiimid-Gruppen zu dem anfänglichen Säuregehalt des eingesetzten Esters kann in weiten Bereichen variieren und liegt erfindungsgemäß vorzugsweise im Bereich von 20:1 bis 1:10, bevorzugt 10:1 bis 1:2.

Gemäß einer weiteren Ausführungsform betrifft die vorliegende Erfindung demgemäß auch ein Verfahren wie zuvor beschrieben, wobei das molare Verhältnis an zugesetzten Carbodiimid-Gruppen zu dem anfänglichen Säuregehalt des eingesetzten Esters im Bereich von 20:1 bis 1:10 liegt.

Die eingesetzte Menge der Zusammensetzung Z(W) wird bezogen auf die Gesamtmenge des thermoplastischen Polyurethans. Diese kann erfindungsgemäß in weiten Bereichen variieren, wobei die Zusammensetzung Z(W) erfindungsgemäß in Mengen eingesetzt wird, die für Weichmacher üblich ist. Beispielsweise liegt die Menge der Zusammensetzung Z(W) bezogen auf die Gesamtmenge des thermoplastischen Polyurethans im Bereich von 1 bis 50 Masse-%, insbesondere im Bereich von 2,5 bis 40 Masse-%, bevorzugt im Bereich von 5 bis 35 Masse-%, und besonders bevorzugt im Bereich von 7,5 bis 30 Masse-%. Sofern die Zusammensetzung Z(W) zu einem Reaktionsgemisch zur Herstellung eines thermoplastischen Polyurethans zugegeben wird, bezieht sich die eingesetzte Menge der Zusammensetzung Z(W) im Rahmen der vorliegenden Erfindung auf die Gesamtmenge der eingesetzten Aufbaukomponenten des thermoplastischen Polyurethans.

Gemäß einer weiteren Ausführungsform betrifft die vorliegende Erfindung demgemäß auch ein Verfahren wie zuvor beschrieben, wobei die Menge der Zusammensetzung Z(W) bezogen auf die Gesamtmenge des thermoplastischen Polyurethans im Bereich von 1 bis 50 Masse-% liegt.

Erfindungsgemäß wird die Zusammensetzung Z(W) zu einem thermoplastischen Polyurethan oder einem Reaktionsgemisch zur Herstellung eines thermoplastischen Polyurethans zugegeben.

Die eingesetzten thermoplastischen Polyurethane können ebenfalls in weiten Bereichen variieren. Verfahren zur Herstellung von thermoplastischen Polyurethanen sind allgemein bekannt. Bevorzugt werden die Polyurethane durch Umsetzung von (a) Isocyanaten mit (b) gegenüber Isocyanaten reaktiven Verbindungen und bevorzugt mit (c) Kettenverlängerungsmitteln, gegebenenfalls in Gegenwart von (d) Katalysatoren und/oder (e) üblichen Hilfsstoffen hergestellt.

Im Folgenden sollen beispielhaft bevorzugte Ausgangskomponenten und Verfahren zur Herstellung bevorzugter Polyurethane dargestellt werden. Die bei der Herstellung dieser Polyurethane beispielhaft bevorzugten Komponenten von (a) Isocyanaten, (b) gegenüber Isocyanaten reaktive Verbindungen, (c) Kettenverlängerungsmittel sowie gegebenenfalls (d) Katalysatoren und/oder (e) übliche Hilfsstoffe sollen im Folgenden beschrieben werden. Die Isocyanate (a), die gegenüber Isocyanat reaktiven Verbindungen (b) und, sofern verwendet, auch die Kettenverlängerer (c) werden auch als Aufbaukomponenten angesprochen.

Als organische Isocyanate (a) können allgemein bekannte Isocyanate eingesetzt werden, bevorzugt sind aromatische, aliphatische, cycloaliphatische und/oder araliphatische Isocyanate, weiter bevorzugt Diisocyanate, bevorzugt 2,2'-, 2,4'- und/oder 4,4'-Diphenyl-methandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenyl-ethandiisocyanat und/oder Phenylendiisocyanat, Tri-, Tetra-, Penta-, Hexa-, Hepta- und/oder Oktamethylendiisocyanat, 2-Methylpentamethylendiisocyanat-15, 2-Ethyl-butylen-diisocyanat-1,4, Pentamethylen-diisocyanat-1,5, Butylendiisocyanat-1,4, 1-Isocyanato-3,3,5-trimethyl-5-isocyanatomethyl-cyclohexan (Isophorondiisocyanat, IPDI), 1,4- und/oder 1,3- Bis(isocyanatomethyl)cyclo-hexan (HXDI), 1,4-Cyclohexan-diisocyanat, 1- Methyl-2,4- und/oder -2, 6-cyclohexan-diisocyanat und/oder 4,4'-, 2,4'- und 2,2'-Dicyclohexylmethan-diisocyanat (H12MDI). Weiter bevorzugt 2,2'-, 2,4'- und/oder 4, 4'-Diphenylmethandiiso-cyanat (MDI), 1,5-Naphthylendiisocyanat (NDI), 2,4- und/oder 2,6-Toluylendiiso-cyanat (TDI), Hexamethylendiisocyanat (HDI), 4,4'-, 2,4'- und 2,2'-Dicyclohexylmethan-diisocyanat (H12MDI) und/oder 1-Isocyanato-3,3,5-trimethyl-5-isocyanatomethylcyclohexan IPDI, insbesondere bevorzugt 4,4'- MDI.

Als gegenüber Isocyanaten reaktive Verbindungen (b) können allgemein bekannten gegenüber Isocyanaten reaktiven Verbindungen eingesetzt werden, bevorzugt sind Polyesterole, Polyetherole und/oder Polycarbonatdiole, die auch unter dem Begriff "Polyole" zusammengefasst werden, bevorzugt einer mittleren Funktionalität von 1 ,8 bis 2,3, bevorzugt 1 ,9 bis 2,2, insbesondere 2. Die mittlere Funktionalität gibt hier die Anzahl an Gruppen in einer Mischung an, die durchschnittlich pro Molekül vorliegen und mit der Isocyanat-Gruppe reagieren.

Als Kettenverlängerungsmittel (c) können allgemein bekannte aliphatische, araliphatische, aromatische und/oder cycloaliphatische Verbindungen eingesetzt werden. Geeignete Verbindungen sind dem Fachmann bekannt. Geeignete Verbindungen weisen vorzugsweise gegenüber Isocyanaten reaktive Gruppen wie z.B. Alkohol- oder Amingruppen, bevorzugt Alkoholgruppen auf.

Geeignete Katalysatoren (d), welche insbesondere die Reaktion zwischen den NCO-Gruppen der Isocyanate (a), bevorzugt der Diisocyanate und den Hydroxylgruppen der Aufbaukomponenten (b) und (c) beschleunigen, sind die nach dem Stand der Technik bekannten und üblichen tertiären Amine, bevorzugt sind Triethylamin, Dimethylcyclohexyl-amin, N-Methylmorpholin, N1N'- Dimethylpiperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, bevorzugt Eisen- (MI)- acetylacetonat, Zinnverbindüngen, bevorzugt Zinndiacetat, Zinndioctoat, Zinndilaurat oder die Zinndialkylsalze, aliphatischer Carbonsäuren, bevorzugt Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Verbindung (b) eingesetzt.

Neben Katalysatoren (d) werden in bevorzugten Ausführungsformen den Aufbaukomponenten (a) bis (c) auch übliche Hilfsmittel (e) hinzugefügt. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z. B. gegen Hydrolyse, Licht, Hitze oder Verfärbung, anorganische und/oder organische Füllstoffe und Verstärkungsmittel.

Nähere Angaben über die oben genannten Hilfsmittel und Zusatzstoffe sind der Fachliteratur zu entnehmen, z. B. aus Plastics Additive Handbook, 5th edition, H. Zweifel, ed, Hanser Publishers, München, 2001.

Zur Einstellung der Härte der eines Polyurethans können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 0 bis 1 : 0,35 wobei die Härte des Polyurethans mit zunehmendem Gehalt an (c) ansteigt.

In einer besonders bevorzugten Ausführungsform hat das thermoplastische Polyurethan eine Kennzahl von 980 bis 1200. Die Kennzahl ist definiert durch das molare Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und gegebenenfalls Kettenverlängerer (c).

Die Herstellung der TPU kann nach den bekannten Verfahren kontinuierlich, bevorzugt mit Reaktionsextrudern oder dem Bandverfahren nach one-shot oder dem Prepolymerverfahren, oder diskontinuierlich erfolgen. Erfindungsgemäß bevorzugt ist das one-shot Verfahren. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), sowie die Komponenten (d) und/oder (e) einzeln oder als Gemisch in den Extruder eingeführt, und bevorzugt bei Temperaturen von 100 °C bis 280 °C, weiter bevorzugt bei 140 °C bis 250 °C zur Reaktion gebracht. Das erhaltene TPU wird extrudiert, abgekühlt und granuliert.

Erfindungsgemäß kann die Zusammensetzung Z(W) während oder nach der Herstellung zugegeben werden, beispielsweise zusammen mit den Komponenten (d) und/oder (e).

Bevorzugt sind erfindungsgemäß thermoplastische Polyurethane, die auf Polyetherolen oder Polyesterolen oder Mischungen aus Polyetherolen und Polyesterolen basieren.

Gemäß einer weiteren Ausführungsform betrifft die vorliegende Erfindung demgemäß auch ein Verfahren wie zuvor beschrieben, wobei das thermoplastische Polyurethan ein auf einem Polyesterol oder einem Polyetherol basierendes thermoplastisches Polyurethan ist.

In einer besonders bevorzugten Ausführungsform basiert das thermoplastische Polyurethan auf einem MDI als Diisocyanat und einem Polyesterol und/oder Polyetherol, insbesondere einem Polyester der Adipinsäure mit Butandiol und/oder Ethylenglycol und/oder Methylpropandiol und/oder Propandiol und/oder Hexandiol oder einem Polyether auf der Basis von Polyethylenoxid, Polypropylenoxid sowie Polytetrahydrofuran oder den Mischungen daraus.

Gemäß einer weiteren Ausführungsform betrifft die vorliegende Erfindung auch ein thermoplastisches Polyurethan, erhältlich oder erhalten nach einem Verfahren wie zuvor beschrieben. Die erfindungsgemäßen thermoplastischen Polyurethane zeichnen sich durch eine erhöhte Hydrolysebständigkeit aus.

Weiter betrifft die vorliegende Erfindung auch die Verwendung einer Zusammensetzung Z(W) enthaltend
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
(b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
als Weichmacher für thermoplastische Polyurethane, insbesondere bei der Herstellung von Spritzgussprodukten, Extrusionsprodukten oder Compounds.

Gemäß einem weiteren Aspekt betrifft die vorliegende Erfindung auch Formkörper, enthaltend ein thermoplastisches Polyurethan erhältlich oder erhalten gemäß einem erfindungsgemäßen oder ein erfindungsgemäßes thermoplastisches Polyurethan. Weiter bevorzugt sind als Formkörper Spritzgussprodukte oder Extrusionsprodukte.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung eines thermoplastischen Polyurethans, umfassend die Schritte
   (i) Bereitstellen einer Zusammensetzung Z(W) enthaltend
      (a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
      (b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
   (ii) Zugabe der Zusammensetzung Z(W) zu einem thermoplastischen Polyurethan oder einem Reaktionsgemisch zur Herstellung eines thermoplastischen Polyurethans.
2. Verfahren gemäß Ausführungsform 1, wobei die Zusammensetzung Z(W) gemäß Schritt (ii) einem thermoplastischen Polyurethan durch Eincompoundieren oder Einquellen zugesetzt wird.
3. Verfahren gemäß Ausführungsform 1 oder 2, wobei das thermoplastische Polyurethan ein auf einem Polyesterol oder einem Polyetherol basierendes thermoplastisches Polyurethan ist.
4. Verfahren gemäß einer der Ausführungsformen 1 bis 3, wobei die Zusammensetzung Z(W) mindestens einen Zitronensäureester enthält.
5. Verfahren gemäß einer der Ausführungsformen 1 bis 4, wobei die Zusammensetzung Z(W) mindestens ein Carbodiimid ausgewählt aus der Gruppe bestehend aus monomeren aliphatischen Carbodiimiden, oligomeren aliphatischen Carbodiimiden und polymeren aliphatischen Carbodiimiden enthält.
6. Verfahren gemäß einer der Ausführungsformen 1 bis 5, wobei das molare Verhältnis an zugesetzten Carbodiimid-Gruppen zu anfänglichem molarem Säuregehalt des eingesetzten Esters im Bereich von 20:1 bis 1:10 liegt.
7. Verfahren gemäß einer der Ausführungsformen 1 bis 6, wobei die Menge der Zusammensetzung Z(W) bezogen auf die Gesamtmenge des thermoplastischen Polyurethans im Bereich von 1 bis 50 Masse-% liegt.
8. Thermoplastisches Polyurethan, erhältlich oder erhalten nach einem Verfahren gemäß einer der Ausführungsformen 1 bis 7.
9. Verwendung einer Zusammensetzung Z(W) enthaltend
   (a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
   (b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern ;
   als Weichmacher für thermoplastische Polyurethane.
10. Formkörper, enthaltend ein thermoplastisches Polyurethan erhältlich oder erhalten gemäß einem Verfahren nach einer der Ausführungsformen 1 bis 7 oder ein thermoplastisches Polyurethan gemäß Ausführungsform 8.
11. Formkörper gemäß Ausführungsform 10, wobei der Formkörper ein Spritzgussprodukt, ein Extrusionsprodukt oder ein Compound ist.
12. Verfahren zur Herstellung eines thermoplastischen Polyurethans, umfassend die Schritte
   (i) Bereitstellen einer Zusammensetzung Z(W) enthaltend
      (a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
      (b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
   (ii) Zugabe der Zusammensetzung Z(W) zu einem thermoplastischen Polyurethan oder einem Reaktionsgemisch zur Herstellung eines thermoplastischen Polyurethans.
13. Verfahren gemäß Ausführungsform 12, wobei die Herstellung der Zusammensetzung Z(W) das Vermischen der Komponenten und ein Abbinden der Säurezahl beinhaltet.
14. Verfahren gemäß Ausführungsform 12 oder 13, wobei die Zugabe der Zusammensetzung Z(W) gemäß Schritt (ii) erfolgt, nachdem das Abbinden abgeschlossen ist.
15. Verfahren gemäß einer der Ausführungsformen 12 bis 14, wobei die Zusammensetzung Z(W) gemäß Schritt (ii) einem thermoplastischen Polyurethan durch Eincompoundieren oder Einquellen zugesetzt wird.
16. Verfahren gemäß einer der Ausführungsformen 12 bis 15, wobei das thermoplastische Polyurethan ein auf einem Polyesterol oder einem Polyetherol basierendes thermoplastisches Polyurethan ist.
17. Verfahren gemäß einer der Ausführungsformen 12 bis 16, wobei die Zusammensetzung Z(W) mindestens einen Zitronensäureester enthält.
18. Verfahren gemäß einer der Ausführungsformen 12 bis 17, wobei die Zusammensetzung Z(W) mindestens ein Carbodiimid ausgewählt aus der Gruppe bestehend aus monomeren aliphatischen Carbodiimiden, oligomeren aliphatischen Carbodiimiden und polymeren aliphatischen Carbodiimiden enthält.
19. Verfahren gemäß einer der Ausführungsformen 12 bis 18, wobei das molare Verhältnis an zugesetzten Carbodiimid-Gruppen zu dem anfänglichen Säuregehalt des eingesetzten Esters im Bereich von 20:1 bis 1:10 liegt.
20. Verfahren gemäß einer der Ausführungsformen 12 bis 19, wobei die Menge der Zusammensetzung Z(W) bezogen auf die Gesamtmenge des thermoplastischen Polyurethans im Bereich von 1 bis 50 Masse-% liegt.
21. Thermoplastisches Polyurethan, erhältlich oder erhalten nach einem Verfahren gemäß einer der Ausführungsformen 12 bis 20.
22. Verwendung einer Zusammensetzung Z(W) enthaltend
   (a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
   (b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
   als Weichmacher für thermoplastische Polyurethane.
23. Formkörper, enthaltend ein thermoplastisches Polyurethan erhältlich oder erhalten gemäß einem Verfahren nach einer der Ausführungsformen 12 bis 20 oder ein thermoplastisches Polyurethan gemäß Ausführungsform 21.
24. Formkörper gemäß Ausführungsform 23, wobei der Formkörper ein Spritzgussprodukt, ein Extrusionsprodukt oder ein Compound ist.

Die nachfolgenden Beispiele dienen der Veranschaulichung der Erfindung, sind aber in keiner Weise einschränkend hinsichtlich des Gegenstands der vorliegenden Erfindung.

### Beispiele

Die erfindungsgemäßen Beispiele zeigen, dass der erfindungsgemäße Effekt sich nicht auf das Abfangen durch thermischen Abbau entstehender Carbonsäuren beschränkt, d. h. der stabilisierende Effekt tritt nicht auf beim Zusatz basisch wirkender Stabilisatoren, die nur die entstehende Säure abfangen.

### 1. Säurezahl nach Heißluftlagerung

Citrofol® ATBC BII (Acetyltributylcitrat) wird mit der jeweils angegebenen Menge Carbodiimid vermischt. Der anfängliche Cabodiimid-Anteil ("NCN "frisch") der Mischung wird gemessen.

Die Proben werden für 1h bei erhöhten Temperaturen gelagert und anschließend erneut der Carbodiimid-Anteil bestimmt. Die Ergebnisse sind in Tabelle 1 und 2 wiedergegeben.

Bei 1h 170 °C werden 0,35 % EIastostab® H01 verbraucht.

Bei 1h 190 °C werden 1,60 % Elastostab® H01 verbraucht.

**Tabelle 1**

| | NCN | | |
|---|---|---|---|
| Dosierung Elastostab® H01 [%] | | | |
| NCN Gehalt EIastostab® H01: 6,9 % | frisch | 1h 190 °C | 1h 170 °C |
| 0,1 | 0,008 | ≤0,04 | ≤0,004 |
| 0,5 | 0,039 | ≤0,04 | 0,015 |
| 1,0 | 0,07 | ≤0,03 | 0,044 |
| 2,0 | 0,121 | ≤0,03 | |
| 2,5 | 0,16 | 0,05 | |

**Tabelle 2**

| | gemessener H01-Anteil [%] | | |
|---|---|---|---|
| Dosierung | frisch | 1h 190 °C | 1h 170°C |
| 0,1 | 0,12 | ≤0,06 | ≤0,06 |
| 0,5 | 0,56 | ≤0,06 | 0,22 |
| 1,0 | 1,01 | ≤0,04 | 0,64 |
| 2,0 | 1,75 | ≤0,04 | |
| 2,5 | 2,32 | 0,72 | |

### 2. Thermischer Abbau

Beim thermischen Abbau von Acteyltributylcitrat werden Carbonsäuren freigesetzt. Dies zeigt sich im Anstieg der Säurezahl von anfänglich 0,2 auf 2,9 nach Lagerung des reinen Weichmachers für 1h bei 190 °C.

Der Zusatz von basisch wirkenden Stabilisatoren kann die Erhöhung der Säurezahl nach Lagerung nicht verhindern. Im Gegensatz dazu kann der Zusatz von Elastostab® H01 (Carbodiimid) den Anstieg der Säurezahl vermeiden/auf ein sehr geringes Maß beschränken.

Die Ergebnisse der Vergleichsversuche 2.3 bis 2.10 und des erfindungsgemäßen Beispiels 2.2 sind in Tabelle 3 wiedergegeben.

**Tabelle 3**

| Beispiel | Verbindung | Säurezahl original [mgKOH/g] | Säurezahl 1h/190 °C [mgKOH/g] |
|---|---|---|---|
| 2.1 | Citrofol® ATBC BII Nullprobe | 0,2 | 2,9 |
| 2.2 | Citrofol® ATBC BII +2,5 % Elastostab® H01 [= NCN-Gehalt von 0,17 %] | 0,2 | 0,4 |
| 2.3 | Citrofol® ATBC BII +0,1 % Tris-isopropanolamin | 0,2 | 1,5 |
| 2.4 | Citrofol® ATBC BII +1,0 % Tris-isopropanolamin | 0,2 | 2,1 |
| 2.5 | Citrofol® ATBC BII +0,1 % rganox® 2000 | | 2,7 |
| 2.6 | Citrofol ATBC BII +1,0 % Irganox® 2000 | | 2,6 |
| 2.7 | Citrofol® ATBC BII +0,1 % Trishydroxy-methylamin | 0,2 | 2,4 |
| 2.8 | Citrofol® ATBC BII +1,0 % Trishydroxy-methylamin | 0,2 | 6,4 |
| 2.9 | Citrofol® ATBC BII +0,5 % Stabi-Mischung (*) | 0,2 | 1,4 |
| 2.10 | Citrofol® ATBC BII +0,5 % Calciumstearat | 0,2 | 1,8 |

| | | | |
|---|---|---|---|
| (*) Stabi-Mischung: 45 % Irganox® 245; 45 % Tinuvin® 622; 10 % Irgafoß® TNPP | | | |

### 3. Hydrolysestabilität

Beispiel 3.1 zeigt ein Vergleichsbeispiel mit hydrolysestabilem Weichmacher, Beispiel 3.2 ist ein Vergleichsbeispiel mit Citrofol® BII ohne Bereitstellen der Zusammensetzung Z(W) und Beispiel 3.3 ist ein erfindungsgemäßes Beispiel. Die Versuche zur Hydrolysestabilität sind in Tabelle 4 zusammengefasst.

**Tabelle 4**

| | | | Beispiel 3.1 | Beispiel 3.2 | Beispiel 3.3 |
|---|---|---|---|---|---|
| **Rezeptur** | | | | | |
| Freeflex DPGA [Anteil in %] | | | 15 | | |
| Citrofol® ATBC BII [Anteil in %] | | | | 15 | 15 |
| Anteil Elastostab® H01 in Gesamtrezeptur [%] | | | 0,435 | 0,435 | 0,435 |
| Art der EIastostab® H01 Zugabe | | | Zugabe in TPU Syntheseprozess | Zugabe in TPU Syntheseprozess | Vormischung mit Citrofol ATBC BII |
| | | | | | |
| Prüfunq | Norm | Einheit | Ergebnis | Ergebnis | Ergebnis |

| **Standard** | | | | | |
|---|---|---|---|---|---|
| Dichte | DIN EN ISO 1183-1A | g/cm³ | 1,187 | 1,177 | 1,175 |
| Shore A | DIN 53505 | | 71 | 72 | 73 |
| ZF längs | DIN EN ISO 527 | MPas | 40 | 38 | 40 |
| RD längs | | % | 590 | 570 | 590 |
| WRF | DIN ISO 34-1, B (b | kN/m | 52 | 53 | 52 |
| Abrieb | DIN 53516 | mm³ | 36 | 18 | 29 |

| **Belichtung/ künstli che Alterung** | | | | | |
|---|---|---|---|---|---|
| Hydrolysebeständigkeit | 80 °C, H2O-Dampf | | +56d | 35d | 56d |
| ZF längs | | | 32MPas | 24MPas | 21 MPas |
| RD | | | 820 % | 760 % | 980 % |

Für die Beispiele 3.1 bis 3.3 wurde ein thermoplastisches Polyurethan basierend auf Polyesterol (Butandiol-Adipat), MDI, und 1,4-Butandiol eingesetzt. In allen Rezepturen der Beispiele beträgt der Gesamtgehalt des Hydrolyseschutzmittels Elastostab® H01 0,435 % bezogen auf die Gesamtrezeptur.

Die mechanischen Eigenschaften der in allen drei Versuchen erhaltenen thermoplastischen Polyurethane sind vergleichbar.

Der Vergleich mit dem hydrolysestabilen Weichmacher "Freeflex DPG-A" (Beispiel 3.1) zeigt, dass eine Hydrolysebeständigkeit von 56 Tagen (56d) möglich ist (Referenz), die für technische Anwendungen erwünscht ist.

Wird das Citrofol® BII auf normalem Wege in der TPU Synthese eingebracht (Vergleichsbeispiel 3.2), ist die Hydrolysebeständigkeit des Materials auf maximal 35 Tage (35d) reduziert. Wird dagegen Citrofol® BII erfindungsgemäß (Beispiel 3.3) zuvor mit Elastostab® H01 vermischt und diese Mischung in die TPU Synthese gegeben, lässt sich die Hydrolysebeständigkeit wieder auf 56 Tage (56d) erhöhen.

## Patentansprüche

1. Verfahren zur Herstellung eines thermoplastischen Polyurethans, umfassend die Schritte
(i) Bereitstellen einer Zusammensetzung Z(W) enthaltend
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
(b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
(ii) Zugabe der Zusammensetzung Z(W) zu einem thermoplastischen Polyurethan oder einem Reaktionsgemisch zur Herstellung eines thermoplastischen Polyurethans.

2. Verfahren gemäß Anspruch 1, wobei die Herstellung der Zusammensetzung Z(W) das Vermischen der Komponenten und ein Abbinden der Säurezahl beinhaltet.

3. Verfahren gemäß Anspruch 1 oder 2, wobei die Zugabe der Zusammensetzung Z(W) gemäß Schritt (ii) erfolgt, nachdem das Abbinden abgeschlossen ist.

4. Verfahren gemäß einem der Ansprüche 1 bis 3, wobei die Zusammensetzung Z(W) gemäß Schritt (ii) einem thermoplastischen Polyurethan durch Eincompoundieren oder Einquellen zugesetzt wird.

5. Verfahren gemäß einem der Ansprüche 1 bis 4, wobei das thermoplastische Polyurethan ein auf einem Polyesterol oder einem Polyetherol basierendes thermoplastisches Polyurethan ist.

6. Verfahren gemäß einem der Ansprüche 1 bis 5, wobei die Zusammensetzung Z(W) mindestens einen Zitronensäureester enthält.

7. Verfahren gemäß einem der Ansprüche 1 bis 6, wobei die Zusammensetzung Z(W) mindestens ein Carbodiimid ausgewählt aus der Gruppe bestehend aus monomeren aliphatischen Carbodiimiden, oligomeren aliphatischen Carbodiimiden und polymeren aliphatischen Carbodiimiden enthält.

8. Verfahren gemäß einem der Ansprüche 1 bis 7, wobei das molare Verhältnis an zugesetzten Carbodiimid-Gruppen zu dem anfänglichen Säuregehalt des eingesetzten Esters im Bereich von 20:1 bis 1:10 liegt.

9. Verfahren gemäß einem der Ansprüche 1 bis 8, wobei die Menge der Zusammensetzung Z(W) bezogen auf die Gesamtmenge des thermoplastischen Polyurethans im Bereich von 1 bis 50 Masse-% liegt.

10. Thermoplastisches Polyurethan, erhältlich oder erhalten nach einem Verfahren gemäß einem der Ansprüche 1 bis 9.

11. Verwendung einer Zusammensetzung Z(W) enthaltend
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden, und
(b) mindestens einen Ester ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern;
als Weichmacher für thermoplastische Polyurethane.

12. Formkörper, enthaltend ein thermoplastisches Polyurethan erhältlich oder erhalten gemäß einem Verfahren nach einem der Ansprüche 1 bis 9 oder ein thermoplastisches Polyurethan gemäß Anspruch 10.

13. Formkörper gemäß Anspruch 12, wobei der Formkörper ein Spritzgussprodukt, ein Extrusionsprodukt oder ein Compound ist.

## Claims

1. A process for producing a thermoplastic polyurethane comprising the steps
(i) provision of a composition Z(W) comprising
(a) at least one carbodiimide selected from the group consisting of monomeric aliphatic carbodiimides, oligomeric aliphatic carbodiimides, polymeric aliphatic carbodiimides, monomeric aromatic carbodiimides, oligomeric aromatic carbodiimides and polymeric aromatic carbodiimides, and
(b) at least one ester selected from the group consisting of citric acid esters, acetyl citric acid esters, phthalic acid esters, benzoic acid esters, adipic acid esters, hydrogenated phthalic acid esters and phosphoric acid esters;
(ii) addition of the composition Z (W) to a thermoplastic polyurethane or a reaction mixture for producing a thermoplastic polyurethane.

2. The process according to claim 1, where the production of the composition Z(W) involves the mixing of the components and a setting of the acid number.

3. The process according to claim 1 or 2, where the addition of the composition Z(W) takes place in accordance with step (ii) after the setting has concluded.

4. The process according to one of claims 1 to 3, where the composition Z (W) is added in accordance with step (ii) to a thermoplastic polyurethane by means of incorporation by compounding or incorporation by swelling.

5. The process according to one of claims 1 to 4, where the thermoplastic polyurethane is a thermoplastic polyurethane based on a polyesterol or a polyetherol.

6. The process according to one of claims 1 to 5, where the composition Z (W) comprises at least one citric acid ester.

7. The process according to one of claims 1 to 6, where the composition Z (W) comprises at least one carbodiimide selected from the group consisting of monomeric aliphatic carbodiimides, oligomeric aliphatic carbodiimides and polymeric aliphatic carbodiimides.

8. The process according to one of claims 1 to 7, where the molar ratio of added carbodiimide groups to the initial acid content of the ester used is in the range from 20:1 to 1:10.

9. The process according to one of claims 1 to 8, where the amount of the composition Z(W), based on the total amount of the thermoplastic polyurethane, is in the range from 1 to 50% by mass.

10. A thermoplastic polyurethane obtainable or obtained by a process according to one of claims 1 to 9.

11. The use of a composition Z(W) comprising
(a) at least one carbodiimide selected from the group consisting of monomeric aliphatic carbodiimides, oligomeric aliphatic carbodiimides, polymeric aliphatic carbodiimides, monomeric aromatic carbodiimides, oligomeric aromatic carbodiimides and polymeric aromatic carbodiimides, and
(b) at least one ester selected from the group consisting of citric acid esters, acetyl citric acid esters, phthalic acid esters, benzoic acid esters, adipic acid esters, hydrogenated phthalic acid esters and phosphoric acid esters;
as plasticizer for thermoplastic polyurethanes.

12. A molding comprising a thermoplastic polyurethane obtainable or obtained according to a process according to one of claims 1 to 9 or a thermoplastic polyurethane according to claim 10.

13. The molding according to claim 12, where the molding is an injection molded product, an extrusion product or a compound.

## Revendications

1. Procédé de fabrication d'un polyuréthane thermoplastique, comprenant les étapes suivantes :
(i) la préparation d'une composition Z(W), contenant :
(a) au moins un carbodiimide choisi dans le groupe constitué par les carbodiimides aliphatiques monomères, les carbodiimides aliphatiques oligomères, les carbodiimides aliphatiques polymères, les carbodiimides aromatiques monomères, les carbodiimides aromatiques oligomères et les carbodiimides aromatiques polymères, et
(b) au moins un ester choisi dans le groupe constitué par les esters de l'acide citrique, les esters de l'acide acétylcitrique, les esters de l'acide phtalique, les esters de l'acide benzoïque, les esters de l'acide adipique, les esters de l'acide phtalique hydrogénés et les esters de l'acide phosphorique ;
(ii) l'ajout de la composition Z (W) à un polyuréthane thermoplastique ou à un mélange réactionnel pour la fabrication d'un polyuréthane thermoplastique.

2. Procédé selon la revendication 1, dans lequel la fabrication de la composition Z(W) comprend le mélange des composants et une liaison de l'indice d'acidité.

3. Procédé selon la revendication 1 ou 2, dans lequel l'ajout de la composition Z(W) a lieu selon l'étape (ii) après la fin de la liaison.

4. Procédé selon l'une quelconque des revendications 1 à 3, dans lequel la composition Z(W) est ajoutée selon l'étape (ii) à un polyuréthane thermoplastique par malaxage ou trempage.

5. Procédé selon l'une quelconque des revendications 1 à 4, dans lequel le polyuréthane thermoplastique est un polyuréthane thermoplastique à base d'un polyesterol ou d'un polyétherol.

6. Procédé selon l'une quelconque des revendications 1 à 5, dans lequel la composition Z (W) contient au moins un ester de l'acide citrique.

7. Procédé selon l'une quelconque des revendications 1 à 6, dans lequel la composition Z (W) contient au moins un carbodiimide choisi dans le groupe constitué par les carbodiimides aliphatiques monomères, les carbodiimides aliphatiques oligomères et les carbodiimides aliphatiques polymères.

8. Procédé selon l'une quelconque des revendications 1 à 7, dans lequel le rapport molaire entre les groupes carbodiimide ajoutés et la teneur en acide initiale de l'ester utilisé se situe dans la plage allant de 20:1 à 1:10.

9. Procédé selon l'une quelconque des revendications 1 à 8, dans lequel la quantité de la composition Z(W), par rapport à la quantité totale du polyuréthane thermoplastique, se situe dans la plage allant de 1 à 50 % en masse.

10. Polyuréthane thermoplastique, pouvant être obtenu ou étant obtenu par un procédé selon l'une quelconque des revendications 1 à 9.

11. Utilisation d'une composition Z(W) contenant :
(a) au moins un carbodiimide choisi dans le groupe constitué par les carbodiimides aliphatiques monomères, les carbodiimides aliphatiques oligomères, les carbodiimides aliphatiques polymères, les carbodiimides aromatiques monomères, les carbodiimides aromatiques oligomères et les carbodiimides aromatiques polymères, et
(b) au moins un ester choisi dans le groupe constitué par les esters de l'acide citrique, les esters de l'acide acétylcitrique, les esters de l'acide phtalique, les esters de l'acide benzoïque, les esters de l'acide adipique, les esters de l'acide phtalique hydrogénés et les esters de l'acide phosphorique ;
en tant que plastifiant pour polyuréthanes thermoplastiques.

12. Corps moulé, contenant un polyuréthane thermoplastique pouvant être obtenu ou étant obtenu par un procédé selon l'une quelconque des revendications 1 à 9 ou un polyuréthane thermoplastique selon la revendication 10.

13. Corps moulé selon la revendication 12, dans lequel le corps moulé est un produit moulé par injection, un produit extrudé ou un composé.
